# EUROPEAN PATENT APPLICATION

(11) **EP 3 095 836 A1**
(43) Date of publication of application: **23.11.2016**
(21) Application number: 16166402.4
(22) Date of filing: 21.04.2016
(51) Int. Cl.: C10B 47/30, C10B 47/40, C10B 53/00, C10B 19/00, C10L 9/08, C10B 53/02

(54) **A MICROWAVE PROCESSING DEVICE**

(30) Priority: 22.05.2015 CN 201510264917
(71) Applicant: Chengdu En-shain Technology Incorporation, Chengdu Sichuan (CN); Nanjing SanLe Microwave Technology Development Co. LTD, Nanjing Jiangsu (CN)
(72) Inventor: Lan, Dapeng, Chengdu (CN); Xi, Weilin, Nanjing (CN); Liu, Lin, Chengdu (CN); Yang, Qi, Nanjing (CN); Wu, Yue, Chengdu (CN); Wang, Yong, Nanjing (CN); Cheng, Minglong, Chengdu (CN); Zheng, Yingqi, Nanjing (CN); Jiang, Ming, Chengdu (CN); Mao, Jiaojie, Nanjing (CN); Huang, Jianbo, Chengdu (CN); Zhang, Weiyan, Nanjing (CN)
(74) Representative: Evans, Huw David Duncan

(57) **Abstract**

A microwave processing device, including a kiln head, which runs through and is connected to the rotary kettle, and multiple parts of the kiln head are equipped with microwave feeding inlet, and the kiln head is connected with microwave generator via the microwave tube; the kiln head is connected to a feeding mechanism, and the rotary kettle is set up with a collecting opening and a discharging mechanism, and the collecting opening is connected with condensing and recycling unit unit. The microwave processing device of this invention makes use of the microwave energy to rapidly heat the material inside the rotary kettle, and rotates the rotary kettle at the same time, to make the material more uniformly heated and improve the material pyrolyzing efficiency, and it can greatly improve the pyrolyzing and separating efficiency of the material, effectively reduce the energy consumption and significantly improve the safety of the equipment operation; in the meanwhile, it also avoids the secondary pollution to the environment caused by the burning of the heating energy, thus effectively improves the economic and social benefits.(Fig.1)

## Description

This invention relates to a microwave processing device, mainly used for material drying and pyrolyzing, separating and extracting.

A rotary furnace is common equipment for material drying, and currently the rotary furnace used for material drying mainly makes use of the conventional energy such as electricity, coal, and gas, etc., to conduct external heating of the rotary kettle on the rotary furnace thus to raise the temperature of the material inside the kettle for final extracting and separating. Conventional energy has some of the following disadvantages: low thermal conversion efficiency, low time efficiency, high energy consumption, and the emission after the combustion of conventional energy will cause secondary pollution to the environment. The rotary furnace using conventional energy, due to the low heat utilization efficiency, results in low drying treatment ability, which usually is 1 m3 per hour or so.

When disposing oil-containing and water-containing drilling cuttings generated in oilfield exploitation, the disadvantages of the rotary furnace that uses conventional energy, such as low treating capacity will be especially prominent, especially with the excessive mining of shale gas, the drilling waste generated like oil-based rock debris significantly increases, and in the exploiting and de-oiling process of oil sands mine at home and abroad, so far there has been no high efficiency and low energy consumption technology for oil removal, nor corresponding pyrolyzing and separating process equipment.

The purpose of the present invention is to provide a microwave processing device, which can greatly improve the efficiency of pyrolyzing and separating process, effectively reduce the energy consumption, and reduce the secondary pollution to the environment.

To achieve the above purpose, the technical scheme taken in an embodiment of the invention is:
Include a kiln head which runs through and is connected to a rotary kettle, the kiln head is connected with a microwave generator via a microwave waveguide, and multiple parts of the kiln head are equipped with microwave feeding inlet which is used to introduce the microwave sources generated by the microwave generator into the rotary kettle to heat the material; the kiln head is connected to a feeding mechanism, and the rotary kettle is set up with a collecting opening and a discharging mechanism, and the collecting opening is connected to a condensing and recycling unit.

Preferably, the rotary kettle is internally equipped with the spiral blade.

Preferably, a flexible sealing device is set up between the kiln head and the rotary kettle.

Preferably, the rotary kettle is driven to rotate by variable frequency motor.

Preferably, the internal surface of the rotary kettle is sprayed and coated with high-temperature resistance non-stick material.

Preferably, the height of the spiral blade is 1 mm -500 mm, and the thickness of the spiral blade is 2 mm -50 mm.

Beneficial effects achieved from the microwave processing device of this invention are:
Make use of the microwave energy to rapidly heat the material inside the rotary kettle, and rotate the rotary kettle at the same time, to make the material more uniformly heated, improve the material pyrolyzing efficiency, which can greatly improve the pyrolyzing and separating efficiency of the material and effectively reduce the energy consumption; in the meanwhile, it also avoids the secondary pollution to the environment caused by the burning of the heating energy, thus can effectively improve the economic and social benefits.

An embodiment of the present invention will now be described by way of an example only and with reference to the accompanying drawings, in which:
Figure 1 is a front view of an embodiment of a microwave processing device in accordance with the present invention; and
Figure 2 is a left view of an embodiment of a microwave processing device in accordance with the present invention.

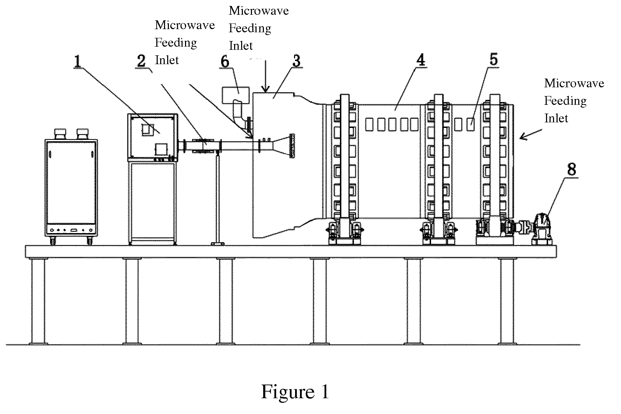

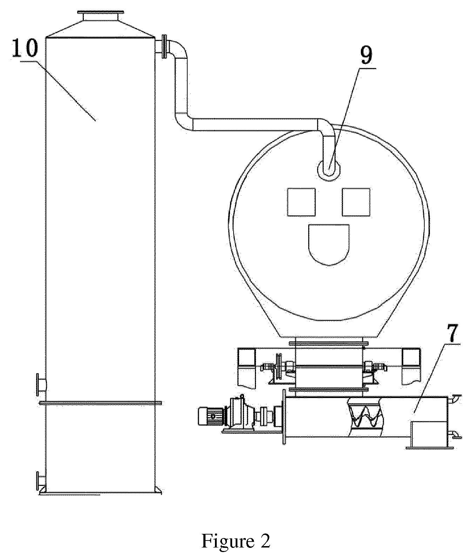

Embodiment 1: Referring to figures 1 and 2 of the drawings, the microwave processing device includes a kiln head 3, and the kiln head 3 runs through and is connected to a rotary kettle 4, the kiln head 3 is connected to a microwave generator 1 via a microwave waveguide 2, multiple parts of the kiln head 3 are equipped with microwave feeding inlet, the microwave waveguide 2 pass through the microwave feeding inlet and goes into the kiln head 3, the position of the microwave feeding inlet on the kiln head 3 can be on the left side, upper part and right side of the kiln head 3, the high-power microwave generated by the microwave generator 1 can pass through the kiln head 3 via the microwave waveguide 2, and are conveyed into the kiln head 4 for internal heating, thus to achieve the purpose of pyrolyzing and separating of the material; the power of the microwave generated by the microwave generator 1 generally is above 10KW, which can heat the material to 200∼1000°C. The microwave generator 1 and the kiln head 3 both are fastened to the pedestal, the kiln head 3 is connected to a feeding mechanism 6 which lifts the material to run through the kiln head 3 to be conveyed into the rotary kettle 4 for heating treatment, and the rotary kettle 4 is equipped with a collecting opening 9 and a discharging mechanism 7; the collecting opening 9 is connected to the condensing and recycling unit 10, the decomposed gas enters the condensing and recycling unit 10 via the collecting opening 9 to be condensed and recycled, and the pyrolyzed solid substances are discharged via the discharging mechanism 7.

Embodiment 2: Referring to figures 1 and 2 of the drawings, and as a preferred implementation of embodiment 1, the rotary kettle 4 is internally equipped with the spiral blade 5 which can stir and rotate the material in the rotary kettle 4 to make it uniformly heated, and it can also convey the material to the discharging outlet and adjust the microwave's field intensity distribution in the cavity, to make the microwave to more uniformly effect on the material.

Embodiment 3: Referring to figures 1 and 2 of the drawings, and as a preferred implementation of embodiment 1 or 2, a flexible sealing device 6 is set up between the kiln head 3 and the rotary kettle 4, to ensure that the high temperature gas generated by microwave and material pyrolyzing will not leak.

Embodiment 4: Referring to figures 1 and 2 of the drawings, and as a preferred implementation of embodiment 2 or 3, the rotary kettle is driven to rotate by the variable frequency motor 8, and the rotary kettle 4 can rotate in the positive and reverse directions under the drive of the variable frequency motor 8 to make the material uniformly heated, in the meanwhile, it drives the material to move forward or backward by the spiral blade 5, so as to achieve the purpose of feeding from the kiln head and discharging from the kiln head, and the rotation speed may be adjustable from 1 r/min to 100 r/min.

Embodiment 5: as a preferred implementation of embodiment 1∼4, the internal surface of the rotary kettle 4 is sprayed and coated with high-temperature resistance non-stick material, to prevent oil-containing material from adhering on the internal surface of the rotary kettle 4, to improve the heating efficiency.

Embodiment 6: as a preferred implementation of embodiment 2, the height of the spiral blade 5 is 1 mm to 500 mm, and the thickness of the spiral blade 5 is 2 mm to 50 mm, the angle between the blade and the cavity axis is 0∼179o, and the angle of the blade 5 can be adjusted when used, to make the electric field distribution of the material more uniform.

The microwave processing device of this invention can be used in the drilling operation site or the oil field, recycling station of the oil-containing material, and it can rapid heat oil-containing material by using microwave technology, to enable the oil-containing material to pyrolyze and separate, so as to achieve the purpose of the recycling of oil-containing materials.

## Claims

1. A microwave processing device, including a kiln head, and the said kiln head runs through and is connected to a rotary kettle, which is **characterized in that**: the said kiln head is connected with a microwave generator via microwave waveguide, multiple parts of the said kiln head are equipped with microwave feeding inlet which is used to introduce the microwave generated by the microwave generator into the rotary kettle to heat the material, the said kiln head is connected to a feeding mechanism, the rotary kettle is equipped with a collecting opening and a discharging mechanism, and the said collecting opening is connected with a condensing and recycling unit.

2. The microwave processing device of claim 1, wherein the said rotary kettle is internally equipped with spiral blade.

3. The microwave processing device of claim 1 or 2, wherein a flexible sealing device is set up between the said kiln head and the said rotary kettle.

4. The microwave processing device of claim 1 or 2, wherein the said rotary kettle is driven to rotate by variable frequency motor.

5. The microwave processing device of claim 1 or 2, wherein the internal surface of the said rotary kettle is sprayed and coated with high-temperature resistance non-stick material.

6. The microwave processing device of claim 2, wherein the height of the said spiral blade is 1mm∼500mm and the thickness of the said spiral blade is 2mm∼50mm.

7. The microwave processing device of claim 1, wherein the power of the said microwave generator is ≥ 10KW.
